# EUROPÄISCHE PATENTSCHRIFT

(11) **EP 3 963 300 B1**
(45) Veröffentlichungstag und Bekanntmachung des Hinweises auf die Patenterteilung: **22.05.2024**
(21) Anmeldenummer: 20722296.9
(22) Anmeldetag: 27.04.2020
(51) Int. Cl.: G01K 17/00, G01K 17/04, G01N 25/48

(54) **DIFFERENTIALKALORIMETER MIT HOHER SENSITIVITÄT**
DIFFERENTIAL CALORIMETER WITH HIGH SENSITIVITY
CALORIMÈTRE DIFFÉRENTIEL À HAUTE SENSIBILITÉ

(30) Priorität: 30.04.2019 DE 102019206214
(43) Veröffentlichungstag der Anmeldung: 09.03.2022
(73) Patentinhaber: Linseis Messgeräte GmbH, 95100 Selb (DE)
(72) Erfinder: VOELKLEIN, Friedemann, 65527 Niedernhausen (DE); LINSEIS, Florian, 95100 Selb (DE); LINSEIS, Vincent, 95100 Selb (DE)
(74) Vertreter: Pfenning, Meinig & Partner mbB
(86) Internationale Anmeldenummer: PCT/EP2020/061584
(87) Internationale Veröffentlichungsnummer: WO 2020/221680

(56) Entgegenhaltungen:
- EP-A1- 1 528 392
- EP-A1- 2 921 833
- EP-A2- 1 215 484
- DE-A1-102005 003 723
- JP-A- 2006 105 935

## Beschreibung

Die Erfindung betrifft ein Differentialkalorimeter zur Erfassung thermodynamischer Kenngrößen einer Probe mit hoher Sensitivität.

Thermoanalyseverfahren dienen der Bestimmung thermodynamischer Kenngrößen, wie z.B. Wärmeleitfähigkeit einer Probe, spezifische Wärmekapazität oder die von einer Probe während eines Phasenübergangs aufgenommene bzw. abgegebene Wärmemenge. Bei der sogenannten dynamischen Differenz-Thermoanalyse (DSC) unterscheidet man üblicherweise zwischen zwei Messprinzipien, dem Wärmestromprinzip, bei dem eine Temperaturdifferenz zwischen der Probe und einer Referenz mit bekannten Eigenschaften gemessen wird, und dem Leistungskompensationsprinzip, bei dem die Heizleistung, die zur vollständigen Kompensation einer Temperaturdifferenz zwischen Probe und Referenz notwendig ist, gemessen wird.

Geräte, die für ein DSC Verfahren geeignet sind, sogenannte Differentialkalorimeter, umfassen üblicherweise mindestens einen Ofen, z.B. einen Silberofen, in dem die Probe und/oder ein Referenz angeordnet sind. Je nach Messprinzip befinden sich die Probe und die Referenz dabei in demselben Ofen (Wärmestromprinzip) oder sind vollständig getrennt und mit separaten Heizelementen ausgestattet (Leistungskompensationsprinzip). Bei der Verwendung eines Silberofens sind die Anwendungen und Einsatzmöglichkeiten derartiger Differentialkalorimeter durch die sehr aufwendige und raumgreifende Bauweise jedoch stark eingeschränkt.

Differentialkalorimeter, bei denen die Heizelemente und die Sensorelemente in einem Schichtverfahren auf einem Substrat aufgebracht sind, können hingegen kostengünstig und in kompakter Bauweise hergestellt werden. Allerdings weisen derart integrierte Sensoren eine oftmals unzureichende mechanische oder thermodynamische Stabilität auf und zeigen nachteilige dissipative Effekte, welche die Auflösung und die Messgenauigkeit des Differentialkalorimeters stark limitieren können.

So sind in EP 2 921 833 A1 ein thermoelektrischer Sensor und ein Verfahren zu dessen Herstellung beschrieben.

EP 1 215 484 A2 betrifft ein Differentialkalorimeter mit einer Wärmesenke eine wärmeleitenden Materials.

Eine Probe, eine Vorrichtung und ein Verfahren für eine Mikrothermoanalyse gehen aus JP 2006 105935 A hervor.

Die Offenbarung von DE 10 2005 003 713 A1 bezieht sich auf eine Thermosäule, die aus mehreren Thermoelementen besteht.

Die Aufgabe der Erfindung besteht daher darin, ein Differentialkalorimeter vorzuschlagen, das in kompakter Bauweise kostengünstig hergestellt werden kann und dabei sowohl eine große Stabilität aufweist als auch eine hohe Messgenauigkeit ermöglicht.

Erfindungsgemäß wird die Aufgabe mit den im Anspruch 1 genannten Merkmalen gelöst. Vorteilhafte Varianten ergeben sich aus den in den Unteransprüchen genannten Merkmalen.

Das erfindungsgemäße Differentialkalorimeter zur Erfassung thermodynamischer Kenngrößen einer Probe weist zumindest ein flächiges Substrat, mindestens ein Thermoelement als Temperatursensor und mindestens ein Heizelement auf. Dabei ist auf mindestens einer Oberfläche des flächigen Substrats das mindestens eine Thermoelement als Temperatursensor und das mindestens eine Heizelement jeweils in Form einer Beschichtung ausgebildet. Das flächige Substrat ist mit einem Glas, einer Glaskeramik, Glaskohlenstoff oder einem keramischen Werkstoff, das/die/der eine Wärmeleitfähigkeit kleiner als 20 W/(m K) aufweist, gebildet.

Beispielsweise kann das flächige Substrat mit Quarzglas oder Aluminiumoxid gebildet sein. Das flächige Substrat kann auch mit einer kommerziell verfügbaren Glaskeramik, wie beispielsweise Ceran, als eine bekannte Handelsmarke für Glaskeramiken gebildet sein. Vorzugsweise ist die Wärmeleitfähigkeit des Glases kleiner als 10 W/ (m K), besonders vorzugsweise kleiner als 2 W/ (m K). Die Verwendung eines Glases mit einer geringen Wärmeleitfähigkeit ermöglicht unter anderem eine besonders effiziente Wärmeisolation und die Ausbildung eines stabilen und betragsmäßig großen Temperaturgradienten zwischen einer Probe und einer Referenz, der insbesondere bei der Erfassung von Kenngrößen nach dem Wärmestromprinzip von Vorteil ist. Eine Dicke des flächigen Substrats ist vorzugsweise kleiner als 1 mm. Besonders vorzugsweise liegt eine Dicke des flächigen Substrats im Bereich 0,2 mm bis 5 mm.

Auf mindestens einer Oberfläche des flächigen Substrats ist eine Beschichtung zur Ausbildung eines Temperatursensors und von Heizelementen angeordnet. Insbesondere können Lagen der Beschichtung sowohl in Dünnschicht- als auch Dickschichttechnik auf einem mechanisch und thermodynamisch sehr stabilen flächigen Substrat aus Glas angeordnet werden. Einzelne Lagen der Beschichtung können auch als dünne Zwischenschichten zur Haftvermittlung oder Passivierung nachfolgender Lagen der Beschichtung auf einer Oberfläche des flächigen Substrats oder einer weiteren Lage der Beschichtung aufgebracht sein. Derartige Lagen oder auch weitere Lagen der Beschichtung können beispielsweise mittels plasmaunterstützter chemischer Gasphasenabscheidung oder Sputterprozessen gebildet werden.

Eine Oberfläche des flächigen Substrats, oder Lage der Beschichtung des flächigen Substrats, und/oder das mindestens eine Thermoelement bzw. der mit dem mindestens einen Thermoelement gebildete Temperatursensor kann/können mindestens einen ersten Bereich als Messposition, in oder auf dem eine Referenz angeordnet werden kann, und mindestens einen zweiten Bereich als Messposition, in oder auf dem mindestens eine Probe angeordnet werden kann, aufweisen. Eine Messposition in der eine Probe oder Referenz angeordnet werden kann, kann durch eine Vertiefung oder einen halboffenen oder geschlossenen Hohlraum, die/der in einer oder mehreren Lagen der Beschichtung angeordnet ist, gebildet sein.

Das mindestens eine Thermoelement ist mit mindestens zwei elektrisch miteinander verbundenen Thermoschenkeln gebildet. Eine besonders hohe Auflösung und Sensitivität des Temperatursensors kann dadurch erreicht werden, dass mehrere Thermoelemente elektrisch in Reihe geschalten und zumindest teilweise parallel und zueinander beabstandet angeordnet sind. Dadurch können ein erster und ein zweiter Bereich, die als Messpositionen ausgebildet sind, zumindest teilweise, z.B. kreisförmig, umschlossen werden. Der so gebildete Temperatursensor kann auch als Thermosäule (Thermopile) oder Thermokette bezeichnet werden.

Mehrere Thermoelemente (Thermopiles) können auch in verschiedenen übereinander ausgebildeten Lagen der Beschichtung angeordnet sein. Der Temperatursensor kann auch durch mehrere Lagen der Beschichtung gebildet sein, wobei sich Lagen, die mit Thermoelementen gebildet sind, und Lagen, die als Passivierungsschicht ausgebildet sind, alternierend abwechseln können. Es können auch mehrere zueinander isolierte Thermoelemente in verschiedenen Lagen der Beschichtung angeordnet sein. Vorzugsweise weisen Thermoschenkel eine Dicke von weniger als 1 µm auf.

Die Thermoschenkel können mit Leiterbahnen, die auf dem flächigen Substrat und/oder einer Lage der Beschichtung angeordnet sind, gebildet sein. Besonders vorteilhaft wirkt es sich aus, wenn ein Thermoschenkel mit einer Nickel-Chrom Legierung und der jeweils andere Thermoschenkel mit einer Nickel-Silizium-Legierung gebildet ist. Mindestens ein Thermoschenkel kann aber auch mit polykristallinem Silizium, einer Legierung, in der Silizium enthalten ist, oder einem mit Silizium gebildeten thermoelektrischen Material gebildet sein.

Ein Thermoschenkel, der mit einer Nickel-Chrom-Legierung gebildet ist, kann Chrom mit einem Masseanteil von 15 % bis 25 % enthalten. Ein Thermoschenkel, der mit einer Nickel-Silizium-Legierung gebildet ist, kann Silizium mit einem Masseanteil von 3 % bis 8 % enthalten. Die Ausbildung einer Nickel-Chrom oder Nickel-Silizium Legierung erhöht die Temperaturbeständigkeit und Haftung der Thermoschenkel, insbesondere auf einem Substrat, das mit Quarzglas gebildet ist.

Das mindestens eine Heizelement kann mit mindestens einer elektrischen Leiterbahn aus Platin, Gold oder Aluminium gebildet sein. Vorzugsweise ist das mindestens eine Heizelement so ausgebildet, dass es zumindest in dem Bereich, in oder auf dem die Probe und/oder die Referenz angeordnet sind, die Temperatur des flächigen Substrats, z.B. während der Erfassung thermodynamischer Kenngrößen, konstant halten kann. Das mindestens eine Heizelement ist erfindungsgemäß auf einer Oberfläche des flächigen Substrats oder auf einer Oberfläche einer Beschichtung des flächigen Substrats angeordnet und kann zumindest teilweise mäanderförmig verlaufen. Das mindestens eine Heizelement kann auch so ausgebildet sein, dass es mittels einer Regelung die Temperatur des Substrats erniedrigen oder erhöhen kann, was möglichst mit konstanter Rate erfolgen sollte.

Die Dicke des mindestens einen Heizelements kann weniger als 1µm, vorzugsweise weniger als 500 nm, betragen. Vorzugsweise ist zwischen einer Oberfläche des flächigen Substrats oder einer Lage der Beschichtung und einer Lage der Beschichtung, die mit dem mindestens einen Heizelement gebildet ist, eine Haftvermittlerschicht aus Titan oder Chrom gebildet. Die Haftvermittlerschicht kann eine Dicke von weniger als 10 nm aufweisen.

Eine Lage der Beschichtung, die mit dem mindestens einen Thermoelement oder mit dem mindestens einen Heizelement gebildet ist, kann zumindest teilweise von einer elektrisch isolierenden Passivierungsschicht, bevorzugt bestehend aus SiO₂ oder Si₃N₄, überdeckt sein. Die Dicke einer Passivierungsschicht beträgt vorzugsweise weniger als 1 µm.

Mindestens eine Lage der Beschichtung, die zumindest auf einem Teil der Oberfläche des flächigen Substrats und/oder einer Lage der Beschichtung angeordnet ist, kann mit einer Deckschicht mit geringem Emissionsvermögen, die Beispielsweise aus Gold besteht, zur Minimierung von Wärmestrahlungsemissionen gebildet sein. Vorzugsweise beträgt die Dicke einer mit Gold gebildeten Lage der Beschichtung zwischen 50 nm und 150 nm. Die Verwendung eines flächigen Substrats, das mit Glas gebildet ist, in Kombination mit einer Lage der Beschichtung, die mit Gold gebildet ist, führt zu höheren Endtemperaturen, schnelleren Heizraten und stabileren Messergebnissen.

Das Differentialkalorimeter kann zwei zusätzliche, individuell ansteuerbare Heizelemente in Form einer Beschichtung aufweisen. Mit den zwei zusätzlichen Heizelementen kann ein erster und ein zweiter Bereich, die als Messpositionen ausgebildet sind, jeweils individuell beheizt werden. Dadurch ermöglichen die zwei zusätzlichen Heizelemente unter anderem eine schnelle und effiziente Kompensation einer Temperaturdifferenz zwischen Probe und Referenz, was insbesondere bei der leistungskompensierten Erfassung von thermodynamischen Kenngrößen von Vorteil sein kann.

Das Differentialkalorimeter ist somit geeignet, thermodynamische Kenngrößen sowohl nach dem Wärmestromprinzip als auch nach dem Leistungskompensationsprinzip zu erfassen. Dabei kann sowohl die Temperatur der Probe als auch die Temperatur der Referenz für einen bestimmten Zeitraum oberhalb der Temperatur des Substrats gehalten werden. Sobald in der Probe endotherme oder exotherme Reaktionen auftreten, kann die dabei aufgenommene oder abgegebene Wärme durch die Regelung eines Heizelements so kompensiert werden, dass die Temperatur der Probe mit der Temperatur der Referenz schnell und effizient wieder in Übereinstimmung gebracht werden kann.

Vorzugsweise sind die zwei zusätzlichen Heizelemente mit Leiterbahnen gebildet, die in einem ersten und in einem zweiten Bereich, in oder auf dem eine Probe und/oder Referenz angeordnet werden kann, mäanderförmig verlaufen. Von Vorteil ist es, wenn die zwei zusätzlichen Heizelemente zusammen mit dem Temperatursensor in derselben Lage der Beschichtung angeordnet sind. Die Leiterbahnen der zwei zusätzlichen Heizelemente sind vorzugsweise mit dem Material eines Thermoschenkels gebildet. Besonders vorzugsweise sind die Leiterbahnen der zwei zusätzlichen Heizelemente mit einer Nickel-Chrom-Legierung, einer Nickel-Silizium-Legierung, polykristallinem Silizium, Gold, Aluminium oder Platin gebildet.

Das mindestens eine Heizelement ist auf einer ersten Oberfläche des flächigen Substrats angeordnet, wobei das mindestens eine Thermoelement und ggf. die zusätzlichen Heizelemente ist/sind auf einer dieser ersten Oberfläche gegenüberliegenden zweiten Oberfläche des flächigen Substrats angeordnet. Dabei kann auch das mindestens eine Thermoelement zusammen mit den zusätzlichen Heizelementen in derselben Lage der Beschichtung angeordnet sein. Eine Beschichtung des flächigen Substrats kann auch so erfolgen, dass mindestens eine Lage der Beschichtung, die mit dem mindestens einen Thermoelement als Temperatursensor gebildet ist, auf einer Oberfläche des flächigen Substrats angeordnet ist und auf einer vom flächigen Substrat abgewandten Oberfläche der mindestens einen Lage der Beschichtung, die mit dem mindestens einen Thermoelement als Temperatursensor gebildet ist, eine Passivierungsschicht angeordnet ist und auf einer von dem flächigen Substrat abgewandten Oberfläche der Passivierungsschicht das mindestens eine Heizelement und/oder die mindestens zwei zusätzlichen Heizelemente angeordnet sind.

Das erfindungsgemäße Differentialkalorimeter ermöglicht eine Erwärmung der Probe und /oder Referenz in einem sehr breiten Temperaturbereich. Dabei können große Temperaturdifferenzen zwischen Probe und Referenz auftreten und über einen längeren Zeitraum aufrecht erhalten werden, ohne die mechanische, elektrische oder thermodynamische Stabilität oder Sensitivität des Differentialkalorimeters negativ zu beeinflussen.

Thermodynamische Kenngrößen können auch mit deutlich höherer Frequenz und/oder Amplitude erfasst werden. Insbesondere aufgrund der integrierten und filigran ausgeführten Heiz- bzw. Thermoelemente und der dadurch kleinen thermischen Masse, kann die Temperatur diverser Komponenten des Differentialkalorimeters bzw. die Temperaturen der Probe und/oder Referenz bei deutlich größeren Frequenzen moduliert werden. Eine solche Modulation kann dem Anstieg der Temperatur des Substrats überlagert werden, um die temperaturabhängigen Eigenschaften, insbesondere cₚ bestimmen zu können. Desweiteren wird eine kürzere Ansprech- und Latenzzeit für eine effiziente Datenerfassung ermöglicht.

Es empfiehlt sich, dass die elektrischen Leiterbahnen, mit denen das mindestens eine Heizelement und/oder das mindestens eine Thermoelement und/oder die zusätzlichen Heizelemente gebildet sind, zumindest teilweise parallel zueinander bis an einen äußeren Rand des flächigen Substrats, im Bereich dieses Randes des flächigen Substrats elektrische Kontaktanschlüsse bildend, geführt sind.

Die Thermoelemente bzw. Thermoschenkel können differentiell verschaltet sein. Dabei sind mindestens drei Thermoschenkel elektrisch in Reihe miteinander verbunden, wobei ein erster und ein dritter Thermoschenkel mit einem ersten Material, z.B. NiSi oder Poly-Si, gebildet sind und ein zweiter Thermoschenkel, der zwischen dem ersten und dem dritten Thermoschenkel angeordnet ist, mit einem von dem ersten Material verschiedenen zweiten Material, z.B. NiCr oder Pt, gebildet ist.

Mit einer solchen differentiellen Anordnung bzw. Verschaltung ist es möglich, Leiterbahnen mit nur einem Material, das beispielsweise dem ersten Material entspricht, zu den Kontaktanschlüssen zu führen. Dadurch kann eine zusätzliche Thermospannung am jeweiligen Kontaktpunkt, die ein Störsignal darstellen kann, vermieden werden.

Vorzugsweise sind die elektrischen Leiterbahnen, die zumindest teilweise parallel zueinander bis an einen äußeren Rand des flächigen Substrats, im Bereich dieses Randes des flächigen Substrats elektrische Kontaktanschlüsse bildend, geführt sind, aus dem Material eines der mindestens zwei elektrisch miteinander verbundenen Thermoschenkel gebildet.

Das flächige Substrat kann, um eine thermische Entkopplung des mindestens einen Thermoelements und des mindestens einen Heizelements von den elektrischen Kontaktanschlüssen zu erreichen, mit einer durchströmbaren Öffnung gebildet sein. Die Öffnungsquerschnittsfläche der durchströmbaren Öffnung kann dabei größer als 20 % einer mit dem mindestens einen Heizelement und/oder dem mindestens einen Thermoelement beschichteten Oberfläche des flächigen Substrats sein. Durch die Öffnung kann beispielsweise Luft strömen.

Das flächige Substrat kann zur thermischen Entkopplung des mindestens einen Thermoelements und des mindestens einen Heizelements von den elektrischen Kontaktanschlüssen auch mit mindestens einem sich in Richtung der Kontaktanschlüsse an mindestens einer Stelle verjüngten oder sich kontinuierlich verjüngenden Steg, der einen Bereich des flächigen Substrats, der mit dem mindestens einen Thermoelement und dem mindestens einen Heizelement gebildet ist, und einen Bereich des flächigen Substrats, der mit den elektrischen Kontaktanschlüssen gebildet ist, miteinander verbindet, gebildet sein.

Der spezifische Aufbau des Differenzialkalorimeters und die Verwendung eines wie weiter oben beschriebenen flächigen Substrats, mit darauf abgestimmten Materialien für Thermo- und Heizelemente ermöglicht insbesondere die Kontaktierung von Thermoschenkeln und Leiterbahnen in einem kalten Bereich, dessen Temperatur unterhalb der Temperatur der Probe und/oder Referenz liegen kann.

Nachfolgend soll die Erfindung anhand von Ausführungsbeispielen näher beschrieben werden.

Dabei zeigen
- Figur 1: einen schematischen Schichtaufbau eines Beispiels eines erfindungsgemäßen Differentialkalorimeters,
- Figur 2: eine schematische Ansicht der Vorder- und Rückseite eines Beispiels eines erfindungsgemäßen Differentialkalorimeters.
- Figur 3a,b: eine detaillierte schematische Ansicht der Vorderseite eines Beispiels eines erfindungsgemäßen Differentialkalorimeters.

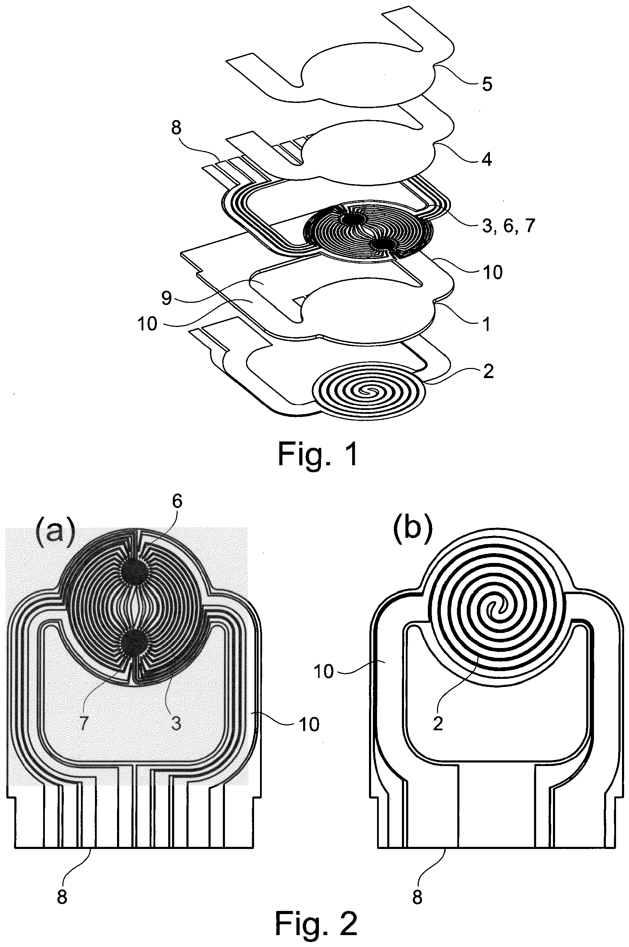

Figur 1 zeigt schematisch einen Schichtaufbau des erfindungsgemäßen Differentialkalorimeters. Das flächige Substrat 1 ist aus Quarzglas mit einer Dicke von 0,7 mm gebildet und weist eine durchströmbare Öffnung 9 auf. Die durchströmbare Öffnung 9 isoliert zumindest teilweise einen heißen Bereich, in dem die Probe und Referenz angeordnet werden kann, von einem kalten Bereich, in dem Kontaktanschlüsse 8 angeordnet sind. Beide Bereiche sind lediglich durch schmale Stege 10 miteinander verbunden.

Auf einer ersten Oberfläche des flächigen Substrats 1 ist ein Heizelement 2 mit mäanderförmig verlaufenden Leiterbahnen aus Platin gebildet. Die Leiterbahnen des Heizelements 2 weisen eine Dicke von 200 nm auf. Zwischen dem flächigen Substrat 1 und dem Heizelement 2 ist eine Haftvermittlerschicht aus Chrom mit einer Dicke von 5 nm angeordnet (nicht gezeigt). Alternativ kann eine Haftvermittlerschicht auch mit Titan gebildet sein.

Auf einer zweiten Oberfläche des flächigen Substrats 1 sind mehrere einen Temperatursensor bildende Thermoelemente 3 gemeinsam mit zwei zusätzlichen Heizelementen 6, 7 in einer Lage der Beschichtung angeordnet. Die zweite Oberfläche ist auf einer der ersten Oberfläche gegenüberliegend Seite des flächigen Substrats 1 angeordnet.

Auf der mit den Thermo- und Heizelementen 3, 6, 7 gebildeten Lage der Beschichtung ist eine Passivierungsschicht 4 aus SiO₂ mit einer Dicke von ca. 1 µm aufgebracht. Auf der Passivierungsschicht 4 ist eine Schicht 5 aus Gold mit einer Dicke von 100 nm, die eine äußere Oberfläche des Differentialkalorimeters bildet, angeordnet.

Wiederkehrende Merkmale sind in den folgenden Figuren mit identischen Bezugszeichen, wie in Figur 1 gezeigt, versehen.

Figur 2a zeigt eine schematische Ansicht der Vorderseite des erfindungsgemäßen Differentialkalorimeters dessen Schichtaufbau in Figur 1 gezeigt ist, wobei die Schicht 5 aus Gold zur einfacheren Darstellung nicht gezeigt ist. Dabei bilden die mäanderförmig verlaufenden Leiterbahnen der zwei zusätzlichen Heizelemente 6, 7 einen ersten und einen zweiten Bereich oder Messpositionen, auf denen jeweils eine Probe und eine Referenz angeordnet werden kann. Zwischen dem ersten und dem zweiten Bereich verlaufen in einer Lage der Beschichtung mehrere Thermoelemente 3 weitestgehend parallel zueinander, wobei die Thermoelemente 3 den ersten und den zweiten Bereich zumindest teilweise kreisförmig umschließen. Mehrere elektrische Leiterbahnen, die aus dem Material eines Thermoschenkels gebildet und mit Thermoelementen 3 und den zusätzlichen Heizelementen 6, 7 elektrisch verbunden sind, sind zumindest teilweise parallel zueinander über schmale Stege 10 bis an einen äußeren Rand des flächigen Substrats 1 geführt. Im Bereich dieses Randes des flächigen Substrats 1 sind elektrische Kontaktanschlüsse 8 gebildet, über die das Differentialkalorimeter mit einer elektronischen Steuer- und Auswerteeinheit verbunden werden kann.

Figur 2b zeigt eine schematische Ansicht der Rückseite des erfindungsgemäßen Differentialkalorimeters dessen Schichtaufbau in Figur 1 gezeigt ist. Dementsprechend sind auf der Rückseite die mäanderförmig verlaufenden und mit Platin gebildeten Leiterbahnen des Heizelements 2 gezeigt, wobei das Heizelement 2 ausgebildet ist, um das flächige Substrat 1 zumindest zeitweise auf einer konstanten Temperatur halten zu können. Analog zur Fig. 2a sind auch auf der Rückseite des Differentialkalorimeters mehrere elektrische Leiterbahnen ausgeführt, die zumindest teilweise parallel zueinander über schmale Stege 10 bis an einen äußeren Rand des flächigen Substrats 1 geführt sind und im Bereich dieses Randes des flächigen Substrats 1 elektrische Kontaktanschlüsse 8 bilden.

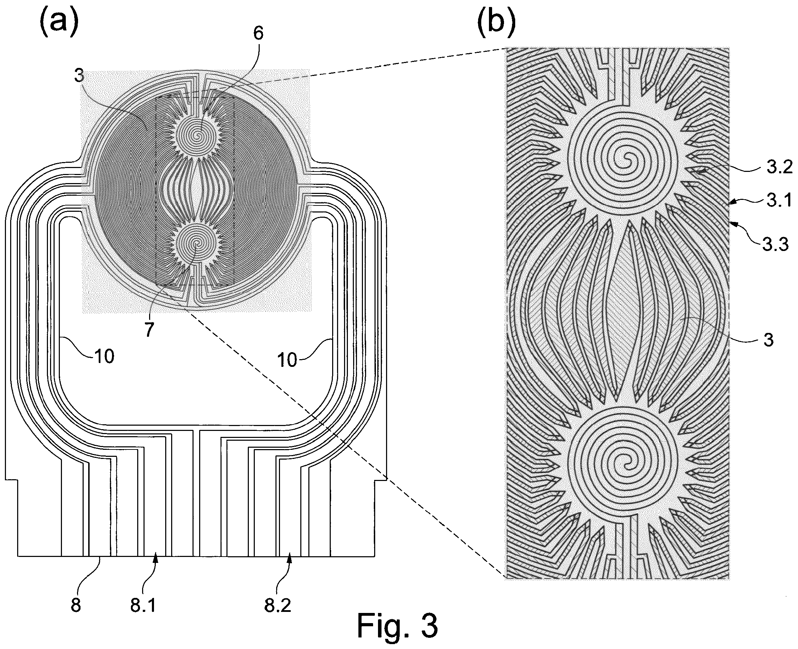

Figur 3a zeigt eine schematische Ansicht der Vorderseite eines erfindungsgemäßen Differentialkalorimeters, bei dem insbesondere die elektrischen Leiterbahnen, mit denen der mit mehreren Thermoelementen 3 gebildete Temperatursensor gebildet sind, zumindest teilweise parallel zueinander über schmale Stege 10 bis an einen äußeren Rand des flächigen Substrats 1, im Bereich dieses Randes des flächigen Substrats 1 elektrische Kontaktanschlüsse 8.1, 8.2 bildend, geführt sind.

Figur 3b zeigt Details der zusätzlichen Heizelemente 6, 7 und des mit mehreren Thermoelementen 3 gebildeten Temperatursensors. Die Thermoelemente 3 sind dabei jeweils mit zwei Thermoschenkeln 3.1, 3.3, die über Kontaktierungen 3.2 elektrisch in Reihe miteinander verbunden sind, gebildet.

Desweiteren sind die mehreren Thermoelemente 3 differentiell verschalten und elektrisch in Reihe miteinander verbunden. Dadurch sind die elektrischen Leiterbahnen, mit denen der mit mehreren Thermoelementen 3 gebildete Temperatursensor gebildet ist mit nur einem Material, das dem Material eines Thermoschenkels 3.1 entspricht, zu den Kontaktanschlüssen 8.1, 8.2 geführt.

Insbesondere ist der Thermoschenkel 3.1 mit einer Nickel-Chrom-Legierung und der jeweils andere Thermoschenkel 3.3 ist mit einer Nickel-Silizium-Legierung gebildet.

## Patentansprüche

1. Differentialkalorimeter zur Erfassung thermodynamischer Kenngrößen einer Probe, bei dem auf Oberflächen eines flächigen Substrats (1) mindestens ein Thermoelement (3) als Temperatursensor und mindestens ein Heizelement (2) jeweils in Form einer Beschichtung ausgebildet sind, wobei
das flächige Substrat (1) mit einem Glas, einer Glaskeramik, Glaskohlenstoff oder einem keramischen Werkstoff, das/die/der eine Wärmeleitfähigkeit kleiner als 20 W/(m K) aufweist, gebildet ist,
**dadurch gekennzeichnet, dass**
das mindestens eine Heizelement (2) auf einer ersten Oberfläche des flächigen Substrats (1) angeordnet ist und das mindestens eine Thermoelement (3) auf einer dieser ersten Oberfläche gegenüberliegenden zweiten Oberfläche des flächigen Substrats (1) angeordnet ist.

2. Differentialkalorimeter nach dem vorhergehenden Anspruch, **dadurch gekennzeichnet, dass**, das flächige Substrat (1) mit Quarzglas oder Aluminiumoxid gebildet ist.

3. Differentialkalorimeter nach einem der vorhergehenden Ansprüche, **dadurch gekennzeichnet, dass** das flächige Substrat (1) eine Dicke im Bereich 0,2 mm bis 5 mm aufweist.

4. Differentialkalorimeter nach einem der vorhergehenden Ansprüche, **dadurch gekennzeichnet, dass** eine Oberfläche des flächigen Substrats (1), eine Oberfläche oder Lage einer Beschichtung des flächigen Substrats (1), und/oder das mindestens eine Thermoelement (3) mindestens einen ersten Bereich als Messposition, in oder auf dem eine Probe angeordnet werden kann, und mindestens einen zweiten Bereich als Messposition, in oder auf dem eine Referenz angeordnet werden kann, aufweist.

5. Differentialkalorimeter nach einem der vorhergehenden Ansprüche, **dadurch gekennzeichnet, dass** der Temperatursensor mit mehreren elektrisch in Reihe geschalteten und zumindest teilweise parallel und zueinander beabstandet verlaufenden Thermoelementen (3) als Thermosäule oder Thermokette gebildet ist.

6. Differentialkalorimeter nach einem der vorhergehenden Ansprüche, **dadurch gekennzeichnet, dass** das mindestens eine Thermoelement (3) mit mindestens zwei elektrisch miteinander verbundenen Thermoschenkeln gebildet ist, wobei
ein Thermoschenkel mit einer Nickel-Chrom Legierung und der jeweils andere Thermoschenkel mit einer Nickel-Silizium-Legierung gebildet ist
oder
ein Thermoschenkel mit einer Nickel-Chrom Legierung oder der jeweils andere Thermoschenkel mit einer Nickel-Silizium-Legierung gebildet ist.

7. Differentialkalorimeter nach einem der vorhergehenden Ansprüche, **dadurch gekennzeichnet, dass** das mindestens eine Thermoelement (3) mit mindestens zwei elektrisch miteinander verbundenen Thermoschenkeln gebildet ist, wobei
mindestens ein Thermoschenkel mit polykristallinem Silizium, einer Legierung, in der Silizium enthalten ist, oder einem mit Silizium gebildeten thermoelektrischen Material gebildet ist und bevorzugt ein Thermoschenkel, der mit einer Nickel-Chrom-Legierung gebildet ist, Chrom mit einem Masseanteil von 15 % bis 25 % und ein Thermoschenkel, der mit einer Nickel-Silizium-Legierung gebildet ist, Silizium mit einem Masseanteil von 3 % bis 8 % enthält.

8. Differentialkalorimeter nach einem der vorhergehenden Ansprüche, **dadurch gekennzeichnet, dass** das mindestens eine Heizelement (2) mit einer elektrischen Leiterbahn aus Platin, Gold oder Aluminium gebildet ist.

9. Differentialkalorimeter nach einem der vorhergehenden Ansprüche, **dadurch gekennzeichnet, dass** die Beschichtung des flächigen Substrats (1), die mit dem mindestens einen Thermoelement (3) gebildet ist, zumindest teilweise von einer elektrisch isolierenden Passivierungsschicht (4) überdeckt ist.

10. Differentialkalorimeter nach einem der vorhergehenden Ansprüche, **dadurch gekennzeichnet, dass** mindestens eine Lage (5) der Beschichtung, die zumindest auf einem Teil der Oberfläche des flächigen Substrats (1) und/oder einer Lage der Beschichtung angeordnet ist, mit Gold zur Minimierung von Wärmestrahlungsemissionen gebildet ist.

11. Differentialkalorimeter nach einem der vorhergehenden Ansprüche, **dadurch gekennzeichnet, dass** zur leistungskompensierten Erfassung thermodynamischer Kenngrößen zwei zusätzliche individuell ansteuerbare Heizelemente (6, 7) in Form einer Beschichtung, ausgebildet sind, wobei
die zwei zusätzlichen Heizelemente (6, 7) bevorzugt mit Leiterbahnen gebildet sind, die in einem ersten Bereich, in oder auf dem eine Probe angeordnet werden kann, und in einem zweiten Bereich, in oder auf dem eine Referenz angeordnet werden kann, mäanderförmig verlaufen und/oder
die zwei zusätzlichen Heizelemente (6, 7) bevorzugt zusammen mit dem Temperatursensor in derselben Lage der Beschichtung angeordnet sind und/oder
die Leiterbahnen der zwei zusätzlichen Heizelemente (6, 7) bevorzugt mit einer Nickel-Chrom Legierung, einer Nickel-Silizium Legierung, poly-kristallinem Silizium, Gold, Aluminium oder Platin gebildet sind.

12. Differentialkalorimeter nach dem vorhergehenden Anspruch, **dadurch gekennzeichnet, dass** die zusätzlichen Heizelementen (6, 7) auf der der ersten Oberfläche gegenüberliegenden zweiten Oberfläche des flächigen Substrats (1) angeordnet sind.

13. Differentialkalorimeter nach einem der vorhergehenden Ansprüche, **dadurch gekennzeichnet, dass** elektrische Leiterbahnen, mit denen das mindestens eine Heizelement (2) und/oder das mindestens eine Thermoelement (3) und/oder zusätzliche Heizelemente (6, 7) gebildet sind, zumindest teilweise parallel zueinander bis an einen äußeren Rand des flächigen Substrats (1), im Bereich dieses Randes des flächigen Substrats (1) elektrische Kontaktanschlüsse (8, 8.1, 8.2) bildend, geführt sind; wobei
bevorzugt die elektrischen Leiterbahnen, die zumindest teilweise parallel zueinander bis an einen äußeren Rand des flächigen Substrats (1), im Bereich dieses Randes des flächigen Substrats (1) elektrische Kontaktanschlüsse (8, 8.1, 8.2) bildend, geführt sind, aus dem Material eines der mindestens zwei elektrisch miteinander verbundenen Thermoschenkel gebildet sind.

14. Differentialkalorimeter nach einem der vorhergehenden Ansprüche, **dadurch gekennzeichnet, dass** das flächige Substrat (1) zur thermischen Entkopplung des mindestens einen Thermoelements (3) und des mindestens einen Heizelements (2) von elektrischen Kontaktanschlüssen (8, 8.1, 8.2) mit einer durchströmbaren Öffnung (9) gebildet ist, wobei
die Öffnungsquerschnittsfläche der durchströmbaren Öffnung (9) bevorzugt größer als 20 % einer mit dem mindestens einen Heizelement (2) und/oder dem mindestens einen Thermoelement (3) beschichteten Oberfläche des flächigen Substrats (1) ist.

15. Differentialkalorimeter nach einem der vorhergehenden Ansprüche, **dadurch gekennzeichnet, dass** das flächige Substrat (1) zur thermischen Entkopplung des mindestens einen Thermoelements (3) und des mindestens einen Heizelements (2) von den elektrischen Kontaktanschlüssen (8, 8.1, 8.2) mit mindestens einem sich in Richtung der Kontaktanschlüsse (8, 8.1, 8.2) an mindestens einer Stelle verjüngten oder sich kontinuierlich verjüngenden Steg, der einen Bereich des flächigen Substrats (1), der mit dem mindestens einen Thermoelement (3) und dem mindestens einen Heizelement (2) gebildet ist, und einen Bereich des flächigen Substrats (1), der mit den elektrischen Kontaktanschlüssen (8, 8.1, 8.2) gebildet ist, miteinander verbindet, gebildet ist.

## Claims

1. A differential scanning calorimeter for detecting thermodynamic parameters of a sample in which, respectively, at least one thermal element (3) as a temperature sensor and at least one heating element (2) are configured, in the form of a coating on surfaces of a planar substrate (1), wherein
the planar substrate (1) is formed with a glass, a glass ceramic, glass carbon or a ceramic material which has a thermal conductivity of less than 20 W/(m K),
**characterized in that**
the at least one heating element (2) is arranged on a first surface of the planar substrate (1) and the at least one thermal element (3) is arranged on a second surface of the planar substrate (1) disposed opposite this first surface.

2. A differential scanning calorimeter in accordance with the preceding claim, **characterized in that** the planar substrate (1) is formed by quartz glass or aluminum oxide.

3. A differential scanning calorimeter in accordance with one of the preceding claims, **characterized in that** the planar substrate (1) has a thickness in the range from 0.2 mm to 5 mm.

4. A differential scanning calorimeter in accordance with one of the preceding claims, **characterized in that** a surface of the planar substrate (1), a surface or a layer of a coating of the planar substrate (1), and/or the at least one thermal element (3) has/have at least one first region as a measurement position in or on which a sample can be arranged and at least one second region as a measurement position in or on which a reference can be arranged.

5. A differential scanning calorimeter in accordance with one of the preceding claims, **characterized in that** the temperature sensor is formed by a plurality of thermal elements (3) as a thermopile or a thermochain that are electrically connected in series and that extend at least partially in parallel with one another and spaced apart from one another.

6. A differential scanning calorimeter in accordance with one of the preceding claims, **characterized in that** the at least one thermal element (3) is formed with at least two thermal arms electrically connected to one another, with
one thermal arm being formed with a nickel chromium alloy and the respective other thermal arm being formed with a nickel silicon alloy
or
with one thermal arm being formed with a nickel chromium alloy or the respective other thermal arm being formed with a nickel silicon alloy.

7. A differential scanning calorimeter in accordance with one of the preceding claims, **characterized in that** the at least one thermal element (3) is formed with at least two thermal arms electrically connected to one another, with
at least one thermal arm being formed with polycrystalline silicon, an alloy in which silicon is contained, or a thermoelectrical material formed with silicon and
preferably one thermal arm that is formed with a nickel chromium alloy containing chromium with a mass fraction of 15% to 25%, and one thermal arm that is formed with a nickel silicon alloy containing silicon with a mass fraction of 3% to 8%.

8. A differential scanning calorimeter in accordance with one of the preceding claims, **characterized in that** the at least one heating element (2) is formed by an electrical conductor track of platinum, gold, or aluminum.

9. A differential scanning calorimeter in accordance with one of the preceding claims, **characterized in that** the coating of the planar substrate (1) that is formed with the at least one thermal element (3) is at least partially covered by an electrically insulating passivation film (4).

10. A differential scanning calorimeter in accordance with one of the preceding claims, **characterized in that** at least one layer (5) of the coating that is at least arranged on a portion of the surface of the planar substrate (1) and/or on a layer of the coating, is formed with gold to minimize heat irradiation emissions.

11. A differential scanning calorimeter in accordance with one of the preceding claims, **characterized in that**, for the power compensated detection of thermodynamic parameters, two additional individually controllable heating elements (6, 7) are configured in the form of a coating, wherein
preferably the two additional heating elements (6, 7) are formed with conductor tracks that extend in a meandering manner in a first region in or on which a sample can be arranged and a second region in or on which a reference can be arranged and/or
the two additional heating elements (6, 7) are preferably arranged together with the temperature sensor in the same layer of the coating and/or
the conductor tracks of the two additional heating elements (6, 7) are formed with a nickel chromium alloy, a nickel silicon alloy, polycrystalline silicon, gold, aluminum, or platinum.

12. A differential scanning calorimeter according to the preceding claim, **characterized in that** the additional heating elements (6, 7) are arranged on the second surface of the flat substrate (1) opposite the first surface.

13. A differential scanning calorimeter in accordance with one of the preceding claims, **characterized in that** the electrical conductor tracks by which the at least one heating element (2) and/or the at least one thermal element (3) and/or additional heating elements (6, 7) is/are formed are guided at least partially in parallel with one another up to an outer margin of the planar substrate (1), forming electrical contact connections (8, 8.1, 8.2) in the region of this margin of the planar substrate (1); wherein
preferably the electrical conductor tracks that are guided at least partially in parallel with one another up to an outer margin of the planar substrate (1), forming electrical contact connections (8, 8.1, 8.2) in the region of this margin of the planar substrate (1), are formed from the material of one of the at least two thermal arms electrically connected to one another.

14. A differential scanning calorimeter in accordance with one of the preceding claims, **characterized in that** the planar substrate (1) is formed with an opening (9) that can be flowed through for the thermal decoupling of the at least one thermal element (3) and of the at least one heating element (2) from electrical contact connections (8, 8.1, 8.2), wherein
the opening cross-section area of the opening (9) that can be flowed through is preferably greater than 20% of a surface of the planar substrate (1) coated with the at least one heating element (2) and/or the at least one thermal element (3).

15. A differential scanning calorimeter in accordance with one of the preceding claims, **characterized in that**, for the thermal decoupling of the at least one thermal element (3) and the at least one heating element (2) from the electrical contact connections (8, 8.1, 8.2), the planar substrate (1) is formed by at least one web that is tapered at at least one point in the direction of the contact connections (8, 8.1, 8.2) or tapers continuously and that connects a region of the planar substrate (1) that is formed by the at least one thermal element (3) and by the at least one heating element (2) and a region of the planar substrate (1) that is formed by the electrical contact connections (8, 8.1, 8.2) to one another.

## Revendications

1. Calorimètre différentiel pour l'acquisition de grandeurs caractéristiques thermodynamiques d'un échantillon, dans lequel au moins un thermocouple (3) comme capteur de température et au moins un élément chauffant (2) sont réalisés sur des surfaces d'un substrat plat (1), respectivement sous la forme d'un revêtement, dans lequel
le substrat plat (1) est formé avec un verre, une vitrocéramique, du carbone vitreux ou un matériau céramique, qui présente une conductivité thermique inférieure à 20 W/(m K),
**caractérisé en ce que**
le au moins un élément chauffant (2) est disposé sur une première surface du substrat plat (1) et le au moins un thermocouple (3) est disposé sur une deuxième surface du substrat plat (1) opposée à cette première surface.

2. Calorimètre différentiel selon la revendication précédente, **caractérisé en ce que** le substrat plat (1) est formé de verre de quartz ou d'alumine.

3. Calorimètre différentiel selon l'une quelconque des revendications précédentes, **caractérisé en ce que** le substrat plat (1) présente une épaisseur dans la plage de 0,2 mm à 5 mm.

4. Calorimètre différentiel selon l'une quelconque des revendications précédentes, **caractérisé en ce qu'**une surface du substrat plat (1), une surface ou couche d'un revêtement du substrat plat (1), et/ou le au moins un thermocouple (3) présente au moins une première zone comme position de mesure, dans ou sur laquelle un échantillon peut être disposé, et au moins une deuxième zone comme position de mesure, dans ou sur laquelle une référence peut être disposée.

5. Calorimètre différentiel selon l'une quelconque des revendications précédentes, **caractérisé en ce que** le capteur de température est formé avec plusieurs thermocouples (3) montés électriquement en série et s'étendant au moins partiellement en parallèle et à distance les uns des autres en tant que thermopile ou chaîne thermique.

6. Calorimètre différentiel selon l'une quelconque des revendications précédentes, **caractérisé en ce que** le au moins un thermocouple (3) est formé avec au moins deux branches thermiques reliées électriquement entre elles, dans lequel
une branche thermique est formée avec un alliage nickel-chrome et l'autre branche thermique respective avec un alliage nickel-silicium
ou
une branche thermique est formée avec un alliage nickel-chrome ou l'autre branche thermique respective avec un alliage nickel-silicium.

7. Calorimètre différentiel selon l'une quelconque des revendications précédentes, **caractérisé en ce que** le au moins un thermocouple (3) est formé avec au moins deux branches thermiques reliées électriquement entre elles, dans lequel
au moins une branche thermique est formée avec du silicium polycristallin, un alliage contenant du silicium ou un matériau thermoélectrique formé avec du silicium et
de préférence, une branche thermique, qui est formée avec un alliage nickel-chrome, contient du chrome dans une proportion en masse de 15 % à 25 % et une branche thermique, qui est formée avec un alliage nickel-silicium, contient du silicium avec une proportion en masse de 3 % à 8 %.

8. Calorimètre différentiel selon l'une quelconque des revendications précédentes, **caractérisé en ce que** le au moins un élément chauffant (2) est formé avec une piste électrique conductrice en platine, en or ou en aluminium.

9. Calorimètre différentiel selon l'une quelconque des revendications précédentes, **caractérisé en ce que** le revêtement du substrat plat (1), qui est formé avec le au moins un thermocouple (3), est au moins partiellement recouvert par une couche de passivation électriquement isolante (4).

10. Calorimètre différentiel selon l'une quelconque des revendications précédentes, **caractérisé en ce qu'**au moins une couche (5) du revêtement, qui est disposée au moins sur une partie de la surface du substrat plat (1) et/ou une couche du revêtement, est formée avec de l'or pour minimiser les émissions de rayonnement thermique.

11. Calorimètre différentiel selon l'une quelconque des revendications précédentes, **caractérisé en ce que**, pour l'acquisition compensée en puissance de grandeurs caractéristiques thermodynamiques, deux éléments chauffants (6, 7) supplémentaires pouvant être commandés individuellement sont réalisés sous la forme d'un revêtement, dans lequel
les deux éléments chauffants (6, 7) supplémentaires sont de préférence formés avec des pistes conductrices qui s'étendent en méandres dans une première zone, dans ou sur laquelle un échantillon peut être disposé, et dans une deuxième zone, dans ou sur laquelle une référence peut être disposée, et/ou
les deux éléments chauffants (6, 7) supplémentaires sont disposés de préférence avec le capteur de température dans la même couche du revêtement et/ou
les pistes conductrices des deux éléments chauffants (6, 7) supplémentaires sont de préférence formées avec un alliage nickel-chrome, un alliage nickel-silicium, du silicium polycristallin, de l'or, de l'aluminium ou du platine.

12. Calorimètre différentiel selon la revendication précédente, **caractérisé en ce que** les éléments chauffants (6, 7) supplémentaires sont disposés sur la deuxième surface du substrat plat (1) opposée à la première surface.

13. Calorimètre différentiel selon l'une quelconque des revendications précédentes, **caractérisé en ce que** des pistes conductrices électriques, avec lesquelles le au moins un élément chauffant (2) et/ou le au moins un thermocouple (3) et/ou des éléments chauffants (6, 7) supplémentaires sont formés, sont guidées au moins en partie parallèlement les unes aux autres jusqu'à un bord extérieur du substrat plat (1), en formant dans la zone de ce bord du substrat plat (1) des bornes de contact (8, 8.1, 8.2) électrique ; dans lequel
de préférence, les pistes conductrices électriques, qui sont guidées au moins partiellement parallèlement les unes aux autres jusqu'à un bord extérieur du substrat plat (1), en formant des bornes de contact (8, 8.1, 8.2) électrique dans la zone de ce bord du substrat plat (1), sont formées à partir du matériau d'une des au moins deux branches thermiques reliées électriquement entre elles.

14. Calorimètre différentiel selon l'une quelconque des revendications précédentes, **caractérisé en ce que** le substrat plat (1) est formé avec une ouverture (9) pouvant être traversée pour le découplage thermique du au moins un thermocouple (3) et du au moins un élément chauffant (2) de bornes de contact (8, 8.1, 8.2) électrique, dans lequel
la surface de section d'ouverture de l'ouverture (9) pouvant être traversée est de préférence supérieure à 20 % d'une surface du substrat plat (1) revêtue du au moins un élément chauffant (2) et/ou du au moins un thermocouple (3).

15. Calorimètre différentiel selon l'une quelconque des revendications précédentes, **caractérisé en ce que** le substrat plat (1), pour le découplage thermique du au moins un thermocouple (3) et du au moins un élément chauffant (2) des bornes de contact (8, 8.1, 8.2) électrique, est formé avec au moins une entretoise se rétrécissant dans la direction des bornes de contact (8, 8.1, 8.2) en au moins un endroit ou se rétrécissant de manière continue, qui relie entre elles une zone du substrat plat (1), qui est formée avec le au moins un thermocouple (3) et le au moins un élément chauffant (2), et une zone du substrat plat (1), qui est formée avec les bornes de contact (8, 8.1, 8.2) électrique.
